# DEMANDE DE BREVET EUROPEEN

(11) **EP 3 279 842 A1**
(43) Date de publication de la demande: **07.02.2018**
(21) Numéro de dépôt: 17182617.5
(22) Date de dépôt: 21.07.2017
(51) Int. Cl.: G06Q 10/08, G06Q 50/28, B65G 69/00

(54) **PROCÉDÉ ET SYSTÈME DE GESTION D'ACCUEIL DE VÉHICULES AU NIVEAU D'UNE PLATEFORME, ET PLATEFORME METTANT EN OEUVRE UN TEL PROCÉDÉ OU SYSTÈME**

(30) Priorité: 02.08.2016 FR 1657483
(71) Demandeur: ESII, 34880 Laverune (FR)
(72) Inventeur: RIEUX, Frédéric, 34800 CEYRAS (FR); LERGENMULLER, Philippe, 34430 SAINT-JEAN de VEDAS (FR); ROSSI, Laurent, 34400 LUNEL (FR)
(74) Mandataire: Pontet Allano & Associes

(57) **Abrégé**

La présente invention concerne un procédé (200) de gestion d'accueil de véhicules au niveau d'une plateforme, à chaque véhicule étant associé un identifiant et un appareil pour localiser ledit véhicule, ledit procédé (200) comprenant pour chaque véhicule :
- une première détection (210) dudit véhicule lorsqu'il se trouve à un temps de trajet restant jusqu'à ladite plateforme, inférieur ou égal à un premier seuil prédéterminé, et
- une deuxième détection (216) dudit véhicule lorsqu'il se trouve à un temps de trajet restant jusqu'à ladite plateforme inférieur ou égal à un deuxième seuil prédéterminé, ou lorsqu'il atteint une position géographique prédéterminée par rapport à ladite plateforme.

Elle concerne également un système et une installation mettant en oeuvre un tel procédé.

## Description

### Domaine technique

La présente invention concerne un procédé de gestion d'accueil de véhicules au niveau d'une plateforme de chargement et/ou de déchargement de produits dans lesdits véhicules. Elle concerne également un système et une plateforme mettant en oeuvre un tel procédé.

Le domaine de l'invention est le domaine de la gestion d'accueil des véhicules dans une plateforme, telle que par exemple une plateforme de chargement et/ou déchargement de véhicules de transport de marchandises de type camions ou poids-lourds, ou une plateforme de collecte de produits achetés par Internet dans des véhicules des utilisateurs, etc.

### État de la technique

Actuellement, la gestion des véhicules dans les plateformes de chargement et/ou de déchargement de produits est réalisée par prise de rendez-vous.

Cette gestion est peu efficace. En effet, il arrive souvent qu'un véhicule, ayant pris un rendez-vous pour un chargement ou un déchargement, soit en avance ou en retard par rapport à l'heure de son rendez-vous, principalement pour des raisons de conditions de circulation. Lorsqu'il est en avance, le véhicule est obligé d'attendre au niveau de la plateforme, l'heure de son rendez-vous. Lorsqu'il est en retard, le véhicule ne peut pas être traité et doit prendre un nouveau rendez-vous, et se met en attente du nouveau rendez-vous, au niveau de la plateforme.

Or, les véhicules en attente au niveau de la plateforme créent des files d'attente encombrantes au niveau de la plateforme. Il arrive souvent que ces files d'attente empêchent même l'accès à la plateforme, ou à un quai de (dé)chargement au niveau de la plateforme, ce qui dégrade le fonctionnement de la plateforme.

Un but de la présente invention est de remédier aux inconvénients précités.

Un autre but de la présente invention est de proposer un procédé et un système de gestion de l'accueil de véhicules dans une plateforme permettant d'améliorer le flux de véhicules dans ladite plateforme.

Il est aussi un but de la présente invention de proposer un procédé et un système de gestion de l'accueil de véhicules dans une plateforme permettant de diminuer le temps d'attente, et/ou les files d'attente, de véhicules dans ladite plateforme.

Encore un autre but de la présente invention est de proposer un procédé et un système de gestion de l'accueil de véhicules dans une plateforme permettant de rendre l'accès à ladite plateforme plus ergonomique pour les véhicules.

### Exposé de l'invention

L'invention permet d'atteindre au moins un de ces objectifs par un procédé de gestion d'accueil de véhicules au niveau d'une plateforme comprenant au moins une zone, dite quai, de chargement et/ou de déchargement de produits dans lesdits véhicules, à chaque véhicule étant associé :
- un identifiant permettant d'identifier ledit véhicule, et
- un appareil pour localiser ledit véhicule ;
ledit procédé comprenant pour chaque véhicule :
- une première détection dudit véhicule lorsqu'il se trouve à un temps de trajet restant jusqu'à ladite plateforme, inférieur ou égal à un premier seuil prédéterminé, et
- une deuxième détection dudit véhicule lorsqu'il se trouve à un temps de trajet restant jusqu'à ladite plateforme, inférieur ou égal à un deuxième seuil prédéterminé, ou lorsqu'il atteint une position géographique prédéterminée par rapport à ladite plateforme.

Ainsi, le procédé selon l'invention, propose de détecter un véhicule se dirigeant vers une plateforme, en au moins deux localisations géographiques lors de son trajet vers ladite plateforme. En détectant un véhicule, en au moins une première localisation se trouvant à un temps de trajet restant prédéterminé jusqu'à la plateforme, il est possible de préparer l'accueil dudit véhicule dans ladite plateforme, en prévision de son arrivée, par exemple en préparant les produits à charger dans le véhicule au niveau d'un quai de chargement, en préparant un quai de déchargement pour décharger des produits depuis ledit véhicule, en s'assurant de l'accessibilité d'un quai pour accueillir ledit véhicule, etc. Il est également possible de mieux organiser les quais de (dé)chargement au niveau de la plateforme en détectant, avant leur arrivés, les véhicules qui doivent être accueillis dans la plateforme. Ainsi, lorsque le véhicule est détecté en une deuxième localisation, plus près de la plateforme comparée à la première localisation, il peut être pris en charge plus rapidement au niveau de la plateforme.

Ainsi, le procédé selon l'invention permet d'augmenter le flux de véhicules au niveau d'une plateforme, diminuer les files d'attente et l'encombrement de la plateforme, et rendre l'accès à la plateforme plus ergonomique pour les véhicules.

Dans la présente demande, le deuxième seuil prédéterminé utilisé lors de la deuxième détection est inférieur au premier seuil utilisé lors de la première détection.

De plus, la position prédéterminée utilisée lors de la deuxième détection correspond nécessairement à une position géographique pour laquelle le temps de trajet restant jusqu'à la plateforme est inférieur au premier seuil utilisé lors de la première détection.

L'identifiant associé à un véhicule peut, par exemple, être une plaque minéralogique dudit véhicule.

Alternativement, l'identifiant peut être attribué par un serveur ou une application, en particulier de manière automatisée, ou choisie par un conducteur du véhicule.

Suivant encore une autre alternative, l'identifiant peut être tout autre identifiant, tel que par exemple un numéro de course (ou de livraison), un numéro de téléphone, etc.

Préférentiellement, la deuxième étape de détection peut être réalisée lorsque le véhicule atteint une position prédéterminée par rapport à ladite plateforme.

Une telle position peut, par exemple, être une entrée de la plateforme ou une position se trouvant à proximité immédiate de ladite plateforme. Ainsi, la deuxième détection est réalisée lorsque le véhicule atteint la plateforme.

La deuxième étape de détection peut être réalisée en fonction de données de position géographique relatives au véhicule.

Alternativement, la deuxième étape de détection peut être réalisée grâce à un capteur positionnée au niveau de ladite position prédéterminée, tel que par exemple une caméra la deuxième étape de détection peut être réalisée grâce à un capteur positionnée permettant de lire la plaque minéralogique du véhicule.

Suivant encore une autre alternative, la deuxième étape de détection peut être réalisée grâce à un capteur embarqué dans le véhicule.

Suivant un exemple de réalisation, nullement limitatif, la deuxième détection peut être réalisée grâce à un émetteur sans fil de très courte portée, telle qu'un émetteur Bluetooth, installée au niveau de la position géographique prédéterminée. Lorsqu'un appareil se trouvant au niveau du véhicule, par exemple un appareil utilisateur de type Smartphone ou tablette, détecte l'émetteur sans fil, cela veut dire qu'il a atteint la position prédéterminée. Cette détection est ensuite signalée vers un serveur distant qui peut, par exemple, être installé sur la plateforme.

Suivant un exemple de réalisation, le premier seuil utilisé pour la première étape de détection peut être le même pour tous les véhicules. Par exemple, le premier seuil peut être 30 minutes, ou une durée choisie entre 5 minutes et 60 minutes.

Alternativement, pour au moins deux véhicules, le premier seuil utilisé lors de la première étape de détection peut être différent. Par exemple, au moins un seuil peut être déterminé en fonction :
- d'une quantité ou d'une nature des produits à (dé)charger, et/ou
- d'une caractéristique du véhicule, et/ou
- d'une caractéristique d'un conducteur dudit véhicule.

Pour au moins un véhicule, le procédé selon l'invention peut comprendre au moins une itération d'une étape de détermination d'un temps de trajet restant entre la localisation actuelle du véhicule et la plateforme.

Plus particulièrement, le procédé selon l'invention peut comprendre un suivi du temps de trajet restant jusqu'à la plateforme et/ou de la position dudit véhicule, de manière continue ou à une fréquence prédéterminée.

Alternativement, ou en plus, le temps de trajet restant, et/ou la position, peu(ven)t être déterminée(s), suite à une requête de la part d'un serveur distant au travers d'un réseau de communication sans fil.

Avantageusement, le procédé selon l'invention peut en outre comprendre, pour au moins un véhicule, au moins une étape d'émission vers ledit véhicule d'une consigne de conduite.

Une telle consigne peut être affichée sur un écran d'affichage se trouvant dans le véhicule, tel qu'un écran faisant partie du véhicule ou un écran d'un appareil utilisateur, de type Smartphone, porté par un conducteur du véhicule ou une personne se trouvant dans le véhicule.

En particulier, la consigne peut indiquer au véhicule et en particulier à son conducteur, de ralentir, d'accélérer ou de maintenir sa vitesse.

L'étape d'émission d'une consigne de conduite peut être réalisée à tout moment, et en particulier après la première détection. L'émission d'une consigne peut être déclenchée par la première détection.

En particulier, lorsqu'un rendez-vous a préalablement été attribué au véhicule, la consigne de conduite peut être fonction d'une part du temps de trajet restant et de la durée restante jusqu'à l'heure du rendez-vous. Par exemple, lorsque la durée entre l'heure actuelle et l'heure du rendez-vous est supérieure au temps de trajet restant jusqu'à la plateforme, alors la consigne envoyée au véhicule peut être une diminution de la vitesse. Ainsi, il est possible de diminuer la vitesse du véhicule, et donc sa consommation, tout en honorant le rendez-vous.

Avantageusement, pour au moins un véhicule, le procédé selon l'invention peut comprendre une étape d'attribution d'un horaire de rendez-vous, ou une étape de modification d'un horaire de rendez-vous préalablement attribué au véhicule, en particulier en fonction du temps de trajet restant jusqu'à la plateforme.

Par exemple, lorsqu'il est déterminé que le temps de trajet restant est plus grand que la durée restante jusqu'à l'heure d'un rendez-vous pris pour ledit véhicule, alors le procédé selon l'invention peut comprendre une étape d'émission d'une requête/proposition de modification de l'heure dudit rendez-vous. Ainsi, le véhicule peut bénéficier de plus temps pour atteindre la plateforme et évite de prendre des risques inutiles pour atteindre la plateforme.

Préférentiellement, pour au moins un véhicule, le procédé selon l'invention peut comprendre au moins une étape d'inscription de l'identifiant dudit véhicule dans une file d'attente d'un quai auquel ledit véhicule a été attribué, en particulier lorsque la plateforme comprend au moins deux quai.

Ainsi, il est possible de réaliser une gestion dynamique des files d'attente, en particulier avant même que les véhicules se présentent sur la plateforme.

Par exemple, lorsqu'un incident se produit au niveau d'un quai, tel qu'un accident ou un retard de (dé)chargement d'un véhicule, il est possible, et est plus facile, d'attribuer dynamiquement un véhicule qui n'est pas encore arrivé à la plateforme à une file d'attente d'un autre quai.

Pour au moins un véhicule, l'attribution dudit véhicule à une file d'attente d'un quai peut être réalisée en fonction de :
- la nature du véhicule, telle que par exemple les dimensions du véhicule, tel que poids lourd, semi-remorque, véhicule privé, etc. ;
- la nature des marchandises transportées, ou à transporter, par le véhicule, tel que par exemple produits secs, produits frais, etc. ; et/ou
- en fonction d'au moins une caractéristique des quais, telle que par exemple la taille du quai.

De plus, le procédé selon l'invention peut comprendre une signalisation, par exemple sonore et/ou lumineuse, de l'attribution d'un véhicule à un quai, par exemple au niveau dudit quai en question.

Avantageusement, l'étape d'inscription peut être déclenchée suite à l'étape de première détection.

Préférentiellement, l'étape de d'inscription peut être déclenchée par l'étape de première détection, par exemple de manière automatisée. Ainsi, pour au moins un véhicule, dès que le temps de trajet restant jusqu'à la plateforme devient inférieur ou égal à un seuil prédéterminé, ce véhicule est inscrit sur une file d'attente, associé à un quai.

Avantageusement, pour au moins un véhicule, le procédé selon l'invention peut comprendre une étape de signalisation vers ledit véhicule d'un identifiant du quai auquel ledit véhicule a été attribué.

Ainsi, en arrivant sur la plateforme, le véhicule peut se diriger directement vers le quai en question, ce qui accélère encore plus le flux de véhicules dans la plateforme, et diminue les files d'attente.

Bien entendu, le procédé selon l'invention peut comprendre, pour au moins un véhicule, au moins une étape de signalisation, au niveau de ladite plateforme, dudit véhicule suite à la première, et/ou à la deuxième détection.

Cette signalisation peut être réalisée au moins vers un serveur distant, et éventuellement en plus au niveau d'un quai auquel le véhicule a été attribué.

La signalisation peut comprendre l'identifiant du véhicule, et éventuellement une donnée horaire relative à la durée jusqu'à l'arrivée dudit véhicule, ou encore une donnée horaire relative à l'heure d'arrivée dudit véhicule sur la plateforme.

La signalisation peut être continue et mise à jour avec suivi du temps de trajet restant jusqu'à la plateforme.

Suivant un mode de réalisation, pour au moins un véhicule, au moins une, en particulier chaque, étape de détection peut être réalisée au niveau dudit véhicule, par exemple grâce à un dispositif de géolocalisation ou de triangulation. Dans ce cas, le procédé selon l'invention comprend une étape de signalisation de ladite détection vers un serveur distant.

Alternativement ou en plus, pour au moins un véhicule, au moins une, en particulier chaque, étape de détection peut être réalisée au niveau d'un serveur distant qui suit la position dudit véhicule, par exemple grâce à un dispositif de géolocalisation ou de triangulation. Dans ce cas, le procédé selon l'invention peut comprendre une étape de signalisation, vers ledit véhicule, qu'il a bien été détecté.

Selon un autre aspect de la même invention, il est proposé un système de gestion d'accueil de véhicules au niveau d'une plateforme comprenant au moins une zone, dite quai, de chargement, et/ou de déchargement, de produits dans lesdits véhicules, à chaque véhicule étant associé un identifiant permettant d'identifier ledit véhicule, ledit système comprenant :
- un serveur distant desdits véhicules ; et
- pour chaque véhicule, un appareil embarqué permettant de localiser ledit véhicule ;
agencés pour mettre en toutes les étapes du procédé selon l'invention.

Pour au moins un véhicule, l'appareil embarqué peut être un appareil utilisateur exécutant une application programmée pour émettre des données vers, et éventuellement recevoir des données depuis, le serveur distant, par exemple au travers d'un réseau de communication sans fil.

Un tel appareil peut être utilisé pour déterminer, par exemple par géolocalisation, la position du véhicule.

Alternativement, ou en plus, l'appareil embarqué peut comporter ou être relié à un module de géolocalisation, de type GPS ou équivalent, pour déterminer la position du véhicule.

Le temps de trajet restant jusqu'à la plateforme peut être déterminé au niveau d'un serveur distant ou au niveau du véhicule.

Le temps de trajet restant peut être déterminé en fonction de la position actuelle du véhicule, de la distance restante et des conditions de circulation, par exemple par une application au niveau du serveur, ou au niveau du véhicule, en particulier installée sur l'appareil embarqué.

Le système peut en outre comprendre des écrans d'affichage permettant d'afficher des informations à destination des conducteurs. Ces écrans peuvent être installés au niveau de la plateforme, par exemple au niveau des quais, sur une voie d'accès aux quais, dans une salle d'attente, etc.

Selon encore un autre aspect de la même invention, il est proposé une plateforme d'accueil de véhicules, en vue d'un chargement de produits dans lesdits véhicules, et/ou d'un déchargement de produits desdits véhicules, équipée :
- d'un système selon l'invention ; ou
- de moyens pour mettre en oeuvre toutes les étapes du procédé selon l'invention.

Une telle plateforme peut être une plateforme pour accueillir des véhicules de transport de marchandises de type camion ou poids-lourds.

Une telle plateforme peut aussi être une plateforme de collecte, par des utilisateurs, de produits achetés par Internet.

### Description des figures et modes de réalisation

D'autres avantages et caractéristiques apparaîtront à l'examen de la description détaillée d'exemples nullement limitatifs, et des dessins annexés sur lesquels :
- la FIGURE 1 est une représentation schématique d'un exemple de réalisation non limitatif d'une plateforme selon l'invention ; et
- la FIGURE 2 est une représentation schématique des étapes d'un exemple de réalisation non limitatif du procédé selon l'invention ; et
Il est bien entendu que les modes de réalisation qui seront décrits dans la suite ne sont nullement limitatifs. On pourra notamment imaginer des variantes de l'invention ne comprenant qu'une sélection de caractéristiques décrites par la suite, isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

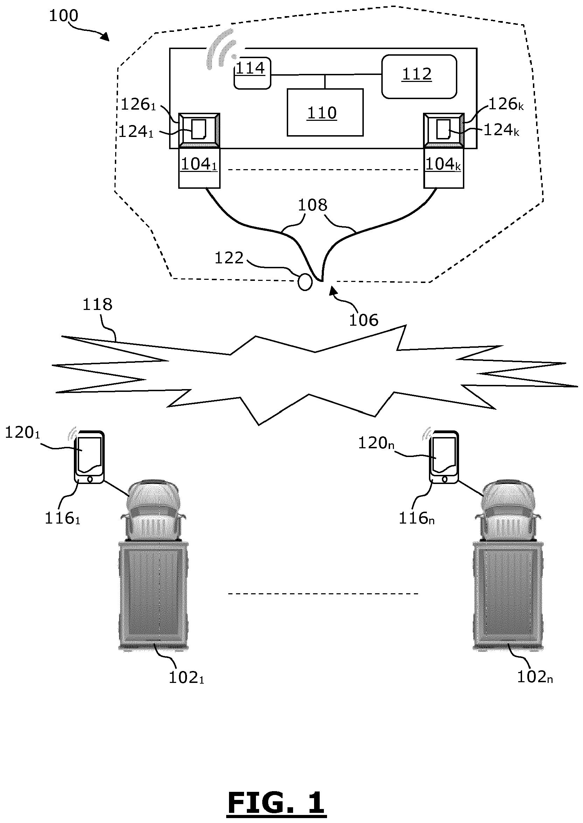

La FIGURE 1 est une représentation schématique d'un exemple de réalisation non limitatif d'une plateforme selon l'invention.

La plateforme 100, représentée sur la FIGURE 1, est équipée d'un exemple de réalisation non limitatif d'un système de gestion d'accueil de véhicules selon l'invention.

Dans l'exemple représenté, la plateforme 100 est une plateforme logistique d'accueil de véhicules 102₁-102ₙ de transport de marchandises, au niveau de plusieurs quais 104₁-104ₘ, en vue de charger des produits dans les véhicules 102₁-102ₙ ou de décharger des produits des véhicules 102₁-102ₙ.

La plateforme 100 comprend au moins une porte d'entrée 106, permettant aux véhicules d'accéder à l'intérieur de la plateforme 100. Il est ensuite possible d'accéder à chaque quai 104₁-104ₙ par un ou des chemins reliant l'entrée 106 à chaque quai 104₁-104ₙ.

La plateforme 100 comprend un serveur central 110, un module 112 de suivi de véhicules et un module 114 pour communiquer avec un appareil embarqué dans chaque véhicule.

Chaque véhicule 102₁-102ₙ, embarque un appareil 116₁-116ₙ permettant de communiquer avec la plateforme 100, et en particulier avec le module de suivi 112 ou le serveur 110, grâce au module de communication 114, au travers d'un réseau de communication sans fil 118.

Dans l'exemple représenté, et de manière nullement limitatif, chaque appareil 116ᵢ est un appareil utilisateur, par exemple un appareil de type Smartphone ou tablette, porté par un conducteur du véhicule ou une personne se trouvant dans le véhicule et relié au réseau de communication sans fil 118, ce dernier pouvant par exemple être un réseau de téléphonie mobile.

Pour chaque véhicule 102ᵢ, le module de suivi 112 est configuré pour :
- d'une part déterminer, en fonction de données de géolocalisation relatives audit véhicule et de données de circulation, un temps de trajet restant entre la position courante du véhicule 102ᵢ et la plateforme 100 ; et
- d'autre part détecter lorsque ledit temps de trajet devient inférieur ou égal à un seuil prédéterminé, par comparaison dudit temps de trajet restant audit seuil. Cette détection est appelée première détection.

Pour chaque véhicule 102ᵢ, les données relatives à la position géographique dudit véhicule 102ᵢ peuvent être déterminées au niveau dudit véhicule 102ᵢ, en particulier par l'appareil 116ᵢ, et transmises vers le module de suivi 112. Suivant un exemple de réalisation non limitatif, chaque appareil 116₁-116ₙ peut exécuter une application 120₁-120ₙ, qui récupère les données de localisation géographique auprès d'un module GPS (non représenté) équipant ledit appareil 116₁-116ₙ, par exemple à une fréquence prédéterminée, et communique ces données au module de suivi 112.

Pour chaque véhicule 102ᵢ, le module de suivi 112 est en outre agencé pour détecter le véhicule 102ᵢ lorsqu'il se trouve à proximité immédiate de la plateforme 100. Cette détection est appelée deuxième détection.

Pour au moins un véhicule 102ᵢ, une telle deuxième détection peut être réalisée, grâce aux données de localisation envoyées par l'appareil 116ᵢ associé audit véhicule 102ᵢ.

Alternativement, une telle deuxième détection peut être réalisée grâce à un capteur installé au niveau de l'entrée 106 de la plateforme, tel que par exemple une caméra pour lire la plaque minéralogique du véhicule 102ᵢ.

Suivant encore une autre alternative, préférée, la plateforme 100 peut comprendre une borne 122 de communication sans fil de très courte portée, par exemple de type Bluetooth, installée au niveau de l'entrée 106. L'application 120ᵢ de l'appareil utilisateur 116ᵢ peut être configurée détecter le signal émis par ladite borne 122 et reconnaitre ladite borne 122. Lorsque l'application 120ᵢ reconnait la borne 122, elle signale sa détection au module de suivi 112. Ainsi, lorsqu'un appareil 116ᵢ d'un véhicule 102ᵢ signale la détection de la borne 122 cela veut dire que le véhicule 102ᵢ est à proximité immédiate de l'entrée 106 de la plateforme 100.

Le serveur 110 est configuré pour recevoir de la part du module de suivi 112 des données signalant les détections des véhicules 102₁-102ₙ.

Lorsque, pour un véhicule 102ᵢ, le module de suivi 112 signale une première détection, le serveur 110 attribue ce véhicule 102ᵢ à un des quais 104₁-104ₖ, en inscrivant l'identifiant du véhicule 102ᵢ sur une file d'attente, respectivement 124₁-124ₖ, associé audit quai.

La file d'attente 124₁-124ₖ peut être affichée sur un écran d'affichage 126₁-126ₖ installée au niveau du quai 104₁-104ₖ.

Le serveur 110 peut en outre être agencé pour :
- signaler à un véhicule 102ᵢ le numéro du quai 104ⱼ auquel est attribué ledit véhicule 102ᵢ ; et
- signaler au niveau du quai 104ⱼ, la présence du véhicule 102ᵢ au niveau de la plateforme 100, lorsque le module de suivi 112 signale la deuxième détection du véhicule 102ᵢ.

Le serveur 110 peut en outre être agencé pour envoyer :
- une consigne de conduite vers un véhicule 102ᵢ, en particulier lorsqu'au moment de la première détection, la durée séparant l'heure actuelle d'une heure de rendez-vous pris pour le véhicule est supérieur au seuil prédéterminé pour la première détection ;
- une invitation à modifier l'heure du rendez-vous, en particulier lorsque la durée séparant l'heure actuelle d'une heure de rendez-vous pris pour le véhicule est très inférieure au temps de trajet restant jusqu'à la plateforme, de sorte qu'il est impossible que le véhicule puisse honorer le rendez-vous.

La communication avec un conducteur d'un véhicule 102ᵢ peut être réalisée au travers de l'application 120ᵢ, par exemple par des messages visuels et/ou vocaux. Le conducteur peut communiquer de manière vocale/visuelle, et/ou par sélection tactile au travers de l'application 120ᵢ.

Dans l'exemple décrit, le serveur 110 et le module de suivi 112 sont installés au niveau de la plateforme 100. Bien entendu, l'un au moins de ces éléments peut être installé sur un site distant, par exemple commun à plusieurs plateformes.

De plus, sur la FIGURE 1, le module de suivi 112 est représenté séparé du serveur 110. Bien entendu, le module de suivi peut alternativement être intégré dans le serveur 110.

La plateforme 100 peut être une plateforme pour accueillir des véhicules de transport de marchandises de type camion ou poids-lourds, pour décharger des produits desdits véhicules et/ou pour charger des produits dans lesdits véhicules.

Alternativement, la plateforme 100 peut aussi être une plateforme de collecte, à la volée et par des utilisateurs, de produits achetés par Internet. Dans une telle plateforme, les produits achetés par chaque utilisateur sont préparés et chargé, par un opérateur ou par l'utilisateur lui-même, dans le véhicule de l'utilisateur au niveau d'une plateforme de collecte.

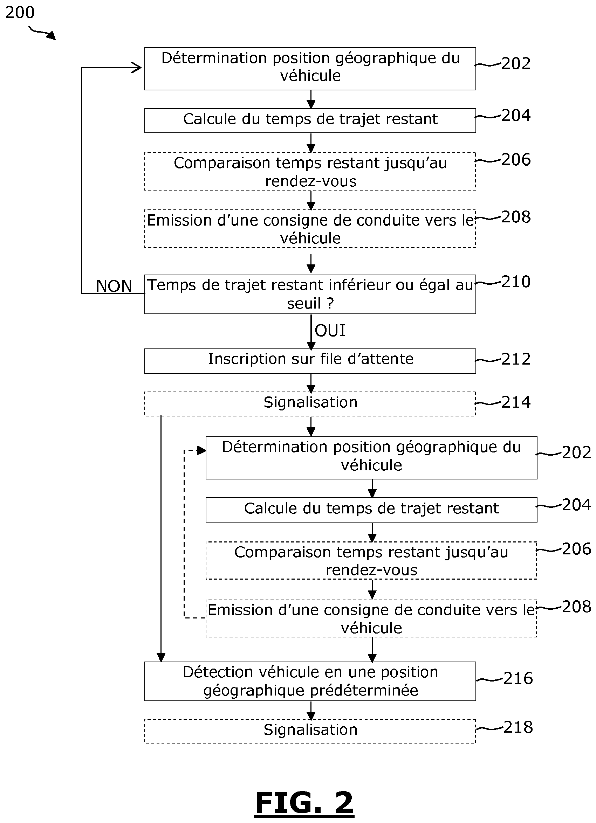

La FIGURE 2 est une représentation schématique d'un exemple de réalisation non limitatif d'un procédé selon l'invention.

Le procédé 200, représenté sur la FIGURE 2, peut par exemple être mis en oeuvre dans la plateforme 100 de la FIGURE 1.

Le procédé 200 comprend une étape 202 lors de laquelle la position géographique du véhicule est déterminée

Lors d'une étape 204, un temps de trajet restant (TTR) jusqu'à la plateforme est déterminée, en fonction :
- de la position géographique déterminée lors de l'étape 202,
- de la position de la plateforme,
- et éventuellement de données relatives à la circulation concernant le trajet entre la position actuelle et la position de la plateforme.

Lors d'une étape optionnelle 206, le TTR déterminé à l'étape 204 est comparé à une durée restante entre l'heure actuelle et une heure de rendez-vous, lorsqu'un rendez-vous a été pris préalablement pour l'accueil dudit véhicule sur la plateforme.

En fonction de ladite comparaison une consigne de maintien, de diminution ou d'accélération, peut être émise vers le véhicule, lors d'une étape 208. Alternativement, lorsque le TTR est supérieur à la durée restante, de sorte qu'il est impossible que le véhicule honore son rendez-vous, alors une invitation peut être envoyée pour modifier l'heure du rendez-vous. Une telle invitation peut être réalisée, par exemple, par affichage d'un message sur un écran d'un appareil utilisateur, au travers d'une application installée dans ledit appareil.

Ensuite, le procédé 200 comprend une étape 210 pour détecter si le véhicule se trouve à un TTR jusqu'à ladite plateforme, inférieur ou égal à un premier seuil prédéterminé. Pour ce faire, lors de l'étape 210, le TTR déterminé à l'étape 204, est comparé audit premier seuil prédéterminé.

Si le TTR jusqu'à ladite plateforme est supérieur au seuil, alors le procédé reprend à l'étape 202.

Dans le cas contraire, une étape 212 réalise une attribution du véhicule à une file d'attente, par exemple associée à un quai, au niveau de la plateforme.

Optionnellement, lors d'une étape de signalisation 214, le procédé réalise :
- une signalisation du numéro du quai au véhicule, et/ou
- une signalisation, au niveau du quai concerné, de l'attribution audit quai dudit véhicule.

L'étape 214 peut, optionnellement, être suivie d'une ou plusieurs itérations des étapes 202 à 208, et ce, jusqu'à ce que le véhicule atteigne une position prédéterminée par rapport à ladite plateforme, très proche ou à proximité immédiate de ladite plateforme, telle que par exemple une entrée de la plateforme comme sur l'exemple de la FIGURE 1.

Lors d'une étape 216, le véhicule est détecté en une position géographique prédéterminée, qui peut être une entrée de la plateforme. Cette étape de détection, appelée deuxième détection, peut être réalisée au niveau du véhicule ou au niveau de la plateforme.

Préférentiellement, l'étape de deuxième détection 216 est réalisée de la manière suivante. Un émetteur sans fil de très courte portée, telle qu'un émetteur Bluetooth, est installée au niveau de la position géographique prédéterminée. Lorsqu'un appareil, embarqué dans le véhicule, par exemple un appareil utilisateur de type Smartphone ou tablette, détecte l'émetteur sans fil, cela veut dire qu'il a atteint la position prédéterminée. Cette détection est signalée vers un serveur distant qui peut, par exemple, être installé sur la plateforme tel que représenté dans l'exemple de la FIGURE 1.

Ensuite une étape 218, optionnelle, peut réaliser une signalisation de la présence du véhicule dans la plateforme, au niveau d'un quai, ou vers au moins un opérateur, auquel le véhicule a été attribué lors de l'étape 212.

Bien entendu, l'invention n'est pas limitée aux exemples qui viennent d'être décrits et de nombreux aménagements peuvent être apportés à ces exemples sans sortir du cadre de l'invention.

## Revendications

1. Procédé (200) de gestion d'accueil de véhicules (102₁-102ₙ) au niveau d'une plateforme (100) comprenant au moins une zone (104₁-104ₖ), dite quai, de chargement et/ou de déchargement de produits dans lesdits véhicules (102₁-102ₙ), à chaque véhicule (102₁-102ₙ) étant associé :
- un identifiant permettant d'identifier ledit véhicule (102₁-102ₙ), et
- un appareil (116₁-116ₙ) pour localiser ledit véhicule (102₁-102ₙ) ;
ledit procédé (200) comprenant pour chaque véhicule (102₁-102ₙ) :
- une première détection (210) dudit véhicule (102₁-102ₙ) lorsqu'il se trouve à un temps de trajet restant jusqu'à ladite plateforme (100), inférieur ou égal à un premier seuil prédéterminé, et
- une deuxième détection (216) dudit véhicule (102₁-102ₙ) lorsqu'il se trouve à un temps de trajet restant jusqu'à ladite plateforme (100) inférieur ou égal à un deuxième seuil prédéterminé, ou lorsqu'il atteint une position géographique prédéterminée par rapport à ladite plateforme (100).

2. Procédé (200) selon la revendication 1, **caractérisé en ce qu'**il comprend, pour au moins un véhicule (102₁-102ₙ), un suivi du temps de trajet et/ou de la position dudit véhicule (102₁-102ₙ), de manière continue ou à une fréquence prédéterminée.

3. Procédé (200) selon l'une quelconque des revendications précédentes, **caractérisé en ce qu'**il comprend, pour au moins un véhicule (102₁-102ₙ), au moins une étape (208) d'émission vers ledit véhicule (102₁-102ₙ) d'une consigne de conduite.

4. Procédé (200) selon l'une quelconque des revendications précédentes, **caractérisé en ce qu'**il comprend, pour au moins un véhicule (102₁-102ₙ), au moins une étape (212) d'inscription de l'identifiant dudit véhicule (102₁-102ₙ) dans une file d'attente (124₁-124ₖ) d'un quai (104₁-104ₖ) auquel ledit véhicule (102₁-102ₙ) a été attribué.

5. Procédé (200) selon la revendication précédente, **caractérisé en ce que** l'étape d'inscription (212) est déclenchée suite à l'étape de première détection (210).

6. Procédé (200) selon l'une quelconque des revendications précédentes, **caractérisé en ce qu'**il comprend, pour au moins un véhicule (102₁-102ₙ), une étape (214) de signalisation, vers ledit véhicule (102₁-102ₙ), d'un identifiant d'un quai (104₁-104ₖ) auquel ledit véhicule (102₁-102ₙ) a été attribué.

7. Procédé (200) selon l'une quelconque des revendications précédentes, **caractérisé en ce qu'**il comprend, pour au moins un véhicule (102₁-102ₙ), au moins une étape de signalisation (212;218), au niveau de ladite plateforme (100), dudit véhicule (102₁-102ₙ) suite à la première, et/ou à la deuxième détection.

8. Procédé (200) selon l'une quelconque des revendications précédentes, **caractérisé en ce que**, pour au moins un véhicule (102₁-102ₙ), au moins une, en particulier chaque, étape de détection (210;216) est réalisée au niveau dudit véhicule (102₁-102ₙ), ledit procédé (200) comprenant une signalisation de ladite détection vers un serveur distant.

9. Procédé (200) selon l'une quelconque des revendications précédentes, **caractérisé en ce qu'**il comprend, pour au moins un véhicule (102₁-102ₙ), une étape d'attribution d'un horaire de rendez-vous, ou une étape de modification d'un horaire de rendez-vous préalablement attribué audit véhicule, en particulier en fonction du temps de trajet restant jusqu'à la plateforme.

10. Système de gestion d'accueil de véhicules (102₁-102ₙ) au niveau d'une plateforme (100) comprenant au moins une zone (104₁-104ₖ), dite quai, de chargement, et/ou de déchargement, de produits dans lesdits véhicule (102₁-102ₙ), à chaque véhicule (102₁-102ₙ) étant associé un identifiant permettant d'identifier ledit véhicule (102₁-102ₙ), ledit système comprenant :
- un serveur (110) distant desdits véhicules (102₁-102ₙ) ; et
- pour chaque véhicule (102₁-102ₙ), un appareil (104₁-104ₙ) embarqué permettant de localiser ledit véhicule (102₁-102ₙ) ;
agencés pour mettre en toutes les étapes du procédé (200) selon l'une quelconque des revendications précédentes.

11. Système selon la revendication précédente, **caractérisé en ce que**, pour au moins un véhicule (102₁-102ₙ), l'appareil embarqué est un appareil utilisateur (116₁-116ₙ) exécutant une application (120₁-120ₙ) programmée pour émettre des données vers le serveur distant (110), par exemple au travers d'un réseau de communication sans fil (118).

12. Plateforme (100) d'accueil de véhicules, en vue d'un chargement de produits dans lesdits véhicules, et/ou d'un déchargement de produits desdits véhicules, équipée :
- d'un système selon l'une quelconque des revendications 10 ou 11 ; ou
- de moyens pour mettre en oeuvre toutes les étapes du procédé (200) selon l'une quelconque des revendications 1 à 9.
